# DEMANDE DE BREVET EUROPEEN

(11) **EP 1 571 412 A1**
(43) Date de publication de la demande: **07.09.2005**
(21) Numéro de dépôt: 05300152.5
(22) Date de dépôt: 28.02.2005
(51) Int. Cl.: G01B 11/10

(54) **Procédé de mesure sans contact du diamètre d'un fil et dispositif pour sa mise en oeuvre**

(30) Priorité: 01.03.2004 FR 0450391
(71) Demandeur: Fil Control, 86300 Sainte Radegonde (FR)
(72) Inventeur: Berthonneau, Thierry, 16710 Ssint Yrieix (FR); Vallee, Sébastien, 16500 Lessac (FR)
(74) Mandataire: Fantin, Laurent

(57) **Abrégé**

L'objet de l'invention est un procédé de mesure d'au moins un diamètre de la section d'un fil (10) dans un plan de mesure sensiblement perpendiculaire à la direction de défilement dudit fil (10), consistant à émettre au moins un faisceau lumineux divergent (12) de source virtuelle A de manière à obtenir à la surface d'au moins un récepteur (14) au moins une image du fil et à mesurer ladite au moins une image, caractérisé en ce qu'il consiste à disposer au moins une source virtuelle et le récepteur associé de telle manière que, lorsque la section du fil se déplace dans une fenêtre de mesure, la valeur mesurée de l'image du fil est sensiblement constante ou du moins sa fluctuation reste dans un intervalle IT correspondant à la précision de la mesure souhaitée.

## Description

La présente invention se rapporte à un procédé de mesure sans contact du diamètre d'un fil ainsi qu'à un dispositif pour la mise en oeuvre dudit procédé.

Dans l'industrie textile, on mesure le diamètre d'un fil lors de son défilement, notamment pour déceler les défauts ou les impuretés. A titre d'exemple, les fils mesurés ont un diamètre qui varie de l'ordre de 0,1 mm à quelques millimètres, et défilent à une vitesse qui varie de l'ordre de 0.5 m/s à 40 m/s. En terme de précision, on tolère généralement une résolution de l'ordre de 0,005 à 0,01 mm.

L'invention se rapporte plus précisément à un procédé de mesure sans contact, qui consiste à utiliser au moins un faisceau lumineux sécant avec le fil à mesurer, de préférence disposé dans un plan perpendiculaire au fil et à mesurer l'image projetée du fil sur un récepteur sensible à la lumière.

Une première solution consiste à utiliser un faisceau lumineux parallèle et à mesurer l'image projetée sur un récepteur. Le principal avantage de cette technique réside dans le fait que la section du fil mesurée peut se déplacer dans un plan sensiblement perpendiculaire au défilement du fil. Du moment que le fil reste à l'intérieur du faisceau, la mesure de la section du fil n'est pas perturbée par ces déplacements, le faisceau lumineux étant parallèle. Cet avantage est essentiel car le fil a tendance à se déplacer, notamment en ondulant ou en vibrant, lors de son défilement s'il n'est pas guidé.

Toutefois, selon cette technique, la précision de la mesure dépend de la qualité du rayon lumineux et notamment du parallélisme. Or, l'émission d'un faisceau lumineux parallèle est relativement complexe à mettre en oeuvre, car elle nécessite un guidage du faisceau, si bien que les coûts d'un tel dispositif sont relativement élevés.

D'autre part, le fait d'utiliser un faisceau parallèle peut rendre la mesure de l'ombre portée sur le récepteur peu fiable si on mesure à l'aide d'une méthode utilisant la diffraction.

Par ailleurs, cette solution ne permet de mesurer la valeur du diamètre du fil que selon une direction, perpendiculaire à la direction du faisceau lumineux, si bien qu'elle ne permet pas de mesurer les défauts de circularité et notamment de repérer les défauts disposés selon la direction du faisceau.

Pour permettre la détection de tels défauts, on utilise plusieurs faisceaux, notamment deux selon des directions perpendiculaires. Cet agencement permet statistiquement d'identifier la majorité des défauts.

Toutefois, le surcoût engendré par la mise en oeuvre d'un faisceau parallèle est multiplié par le nombre de faisceaux si bien que les coûts d'un tel dispositif sont relativement élevés.

Une seconde solution consiste à utiliser au moins un faisceau divergent, de préférence deux faisceaux sensiblement perpendiculaires se projetant sur deux plans récepteurs perpendiculaires, comme illustré dans le document SU1774161. Dans ce cas, la mise en oeuvre du ou des faisceaux est relativement simple et n'engendre pas de surcoût contrairement à un faisceau parallèle. En contrepartie, la précision de la mesure dépend de la position du fil.

Selon ce document, il est nécessaire, à partir de la mesure des points d'intersection des tangentes au fil avec les plans des récepteurs, de calculer pour chaque faisceau la bissectrice des tangentes au fil, puis de déterminer le point d'intersection des deux bissectrices qui correspond au centre du fil, puis la droite perpendiculaire à une tangente passant par le centre du fil, puis le point d'intersection entre ladite droite et ladite tangente, et enfin, de calculer la distance entre ledit point d'intersection et le centre.

Du fait de la longueur de la chaîne de calcul, le temps de calcul est relativement important selon cette technique.

Or, cette durée de calcul est incompatible avec la fréquence requise des mesures pour détecter des défauts sur un fil défilant à une vitesse élevée.

Pour réduire la durée du calcul et obtenir une valeur du diamètre plus directe en fonction de la mesure de l'image sur le récepteur, une autre solution consiste à guider le fil par rapport à la source du faisceau lumineux divergent et au récepteur de manière à ne pas faire intervenir la variation de la position du fil dans le calcul du diamètre en fonction de l'image projetée sur le récepteur.

Toutefois, cette solution n'est pas satisfaisante car elle nécessite un guidage du fil et donc un contact avec ce dernier ce qui engendre d'autres problèmes liés au frottement du fil.

Aussi, la présente invention vise à pallier les inconvénients de l'art antérieur en proposant un nouveau procédé de mesure de fil sans contact permettant d'obtenir une mesure fiable en fonction de la précision requise.

A cet effet, l'invention a pour objet un procédé de mesure d'au moins un diamètre de la section d'un fil dans un plan de mesure sensiblement perpendiculaire à la direction de défilement dudit fil, consistant à émettre au moins un faisceau lumineux divergent de source virtuelle A, de manière à obtenir à la surface d'au moins un récepteur au moins une image du fil et à mesurer ladite au moins une image, caractérisé en ce qu'il consiste à disposer la source virtuelle et le récepteur de telle manière que, lorsque la section du fil se déplace dans une fenêtre de mesure, la valeur mesurée de l'image du fil est sensiblement constante ou du moins sa fluctuation reste dans un intervalle IT correspondant à la précision de la mesure souhaitée.

Cet agencement permet de mesurer à partir d'un faisceau lumineux divergent un fil susceptible de se déplacer selon une direction avec un calcul relativement simple puisque Ø_{R} = Kxe1, K étant une constante, e1 la mesure de l'image et Ø_{R} la mesure du diamètre du fil.

D'autres caractéristiques et avantages ressortiront de la description qui va suivre de l'invention, description donnée à titre d'exemple uniquement, en regard des dessins annexés sur lesquels :
- la figure 1 est un schéma illustrant le procédé de mesure sans contact de l'invention autorisant un débattement du fil selon une direction,
- la figure 2 est un schéma illustrant le procédé de mesure sans contact de l'invention autorisant un débattement du fil dans une fenêtre, et
- la figure 3 est un schéma illustrant le procédé de mesure sans contact en fonctionnement.

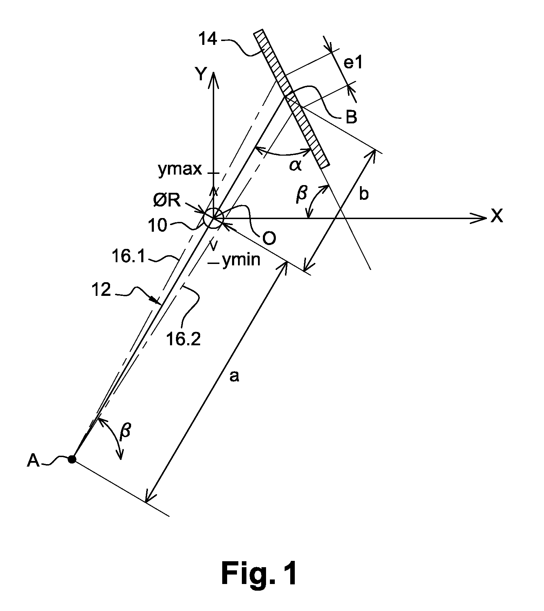

Sur la figure 1, on a représenté en 10 un fil, notamment un fil textile. Pour la suite de la description, on entend par fil un élément long et fin quelles que soient la matière et la forme de sa section.

Un fil a généralement une section circulaire et le procédé de l'invention permet de mesurer au moins un diamètre dans un plan sensiblement perpendiculaire à la direction de défilement, appelé par la suite plan de mesure.

Généralement, le fil 10 mesuré a un diamètre qui varie de l'ordre de 0,1 mm à quelques millimètres, défile à une vitesse qui varie de l'ordre de 0 à 40 m/s, la mesure étant continue ou réalisée par échantillonnage. En terme de précision, on tolère généralement une résolution de l'ordre de 0,005 à 0,01 mm. Pour la suite de la description, la précision sera appelée IT.

Ces valeurs ne sont aucunement limitatives et sont données à titre indicatif pour fixer un ordre de grandeur des contraintes liées à la mesure.

Pour la suite de la description, on considère que dans le plan de la mesure, la position moyenne du centre de la section du fil 10 correspond à l'origine O d'un repère matérialisé par les axes orthogonaux X et Y.

Lors du défilement, le fil 10 peut onduler ou vibrer et sa section peut se déplacer dans un plan sensiblement perpendiculaire à la direction du défilement, ce déplacement étant appelé par la suite débattement.

Dans un cas simplifié, le fil peut onduler dans un plan, ce qui correspond à un débattement selon une direction.

Ainsi, le centre de la section du fil 10 est susceptible de se translater le long de l'axe Y, comme indiqué sur la figure 1.

Le procédé de mesure sans contact consiste à éclairer le fil à l'aide d'au moins un faisceau lumineux divergent 12 dans le plan de mesure et à mesurer l'image projetée, appelée également ombre, du fil sur un récepteur 14 matérialisé par un plan sur les figures.

Les moyens de mesure de l'ombre sur le récepteur 14 peuvent être de différentes natures. Ils ne sont pas plus détaillés car ils sont connus de l'homme de l'art.

De même, le faisceau lumineux 12 n'est pas plus décrit car les techniques de mise en oeuvre sont connues de l'homme de l'art. La source virtuelle du faisceau lumineux 12 divergent est matérialisée par un point référencé A. Le point d'intersection entre le récepteur 14 et la droite AO est référencé B.

Le faisceau lumineux 12 a des dimensions adéquates de manière à contenir la section du fil et générer deux tangentes 16.1 et 16.2 à ladite section du fil délimitant l'image projetée sur le récepteur 14.

Pour la suite de la description, le diamètre du fil dans le plan de mesure est référencé Ø_{R} et l'image projetée du fil 10 sur le récepteur 14 a pour mesure e1.

Le point A du faisceau lumineux divergent 12 est séparé du point O d'une distance a.

Le point B est séparé du point O d'une distance b.

Selon l'invention, le récepteur 14 a un plan de réception non perpendiculaire avec la droite AB, formant un angle α (alpha) entre la droite AB et le plan récepteur.

L'angle a (alpha) est choisi de telle manière qu'il compense les déplacements selon l'axe de débattement Y. Ainsi, lorsque le fil 10 se translate vers les ordonnées positives (vers le haut sur la figure 1), le centre du fil s'éloigne du point A si bien que l'angle formé par les tangentes 16.1 et 16.2 diminue. Toutefois, cette diminution est compensée grâce à l'orientation du plan récepteur, la zone de projection de l'image sur le récepteur étant plus éloignée du point A et l'angle d'incidence formé par le faisceau et le plan récepteur étant plus important ce qui se traduit par une image plus grande. En sens inverse, lorsque le fil 10 se translate vers les ordonnées négatives (vers le bas sur la figure 1), le centre du fil se rapproche du point A si bien que l'angle formé par les tangentes 16.1 et 16.2 augmente. Toutefois, cette augmentation est compensée grâce à l'orientation du plan récepteur, la zone de projection sur le récepteur étant dans ce cas plus proche et l'angle d'incidence étant plus petit ce qui se traduit par une image plus petite.

Selon une caractéristique de l'invention, les valeurs a et b sont choisies de manière à avoir un rapport a/b de l'ordre de 1 à 5 et un angle α (alpha) susceptible de varier de l'ordre 25 à 85° pour permettre un débattement selon l'axe Y. De préférence, l'angle β formé par l'axe X et le plan récepteur varie de l'ordre de 5 à 85°.

Dans ce cas, on note que la mesure e1 est sensiblement constante pour une valeur du diamètre constante, ou du moins sa fluctuation reste dans l'intervalle de tolérance IT correspondant à la précision de la mesure souhaitée, lorsque le point O matérialisant le centre du fil 10 se déplace entre les valeurs ymin et ymax. La distance séparant ymin et ymax est imposée par des contraintes techniques liées notamment à la taille du plan récepteur et du faisceau.

Cet agencement permet de mesurer à partir d'un faisceau lumineux divergent un fil susceptible de se déplacer selon une direction avec un calcul relativement simple puisque Ø_{R} = Ke1, K étant une constante fonction de la géométrie.

D'une manière avantageuse, le rapport a/b est de l'ordre de 2, et l'angle α (alpha) a une valeur de l'ordre de 40 à 60°.

Selon un mode de réalisation, l'angle α (alpha) a une valeur de l'ordre de 55°.

De manière préférentielle, le faisceau lumineux 12 forme un angle de divergence de l'ordre de 15°.

Selon une autre caractéristique de l'invention, le dispositif comprend deux sources A1 et A2 disposées de telle manière que la mesure obtenue avec l'une des sources compense la mesure obtenue avec l'autre source lorsque le fil se translate selon l'axe X.

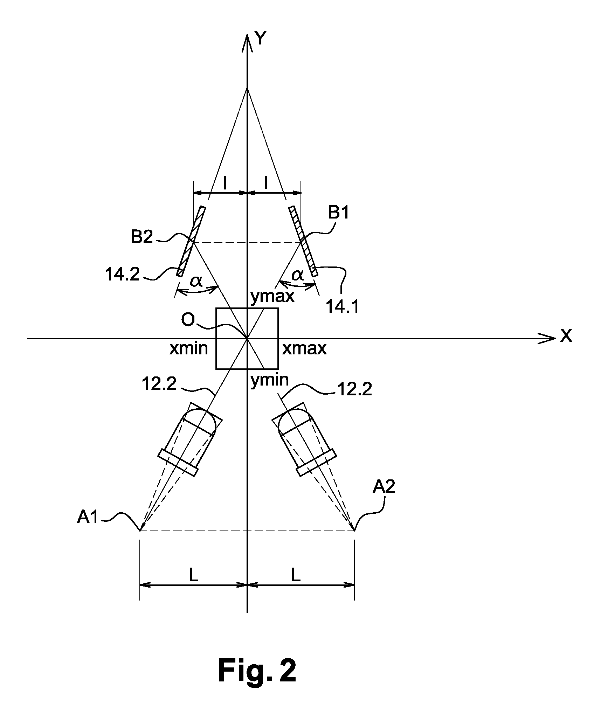

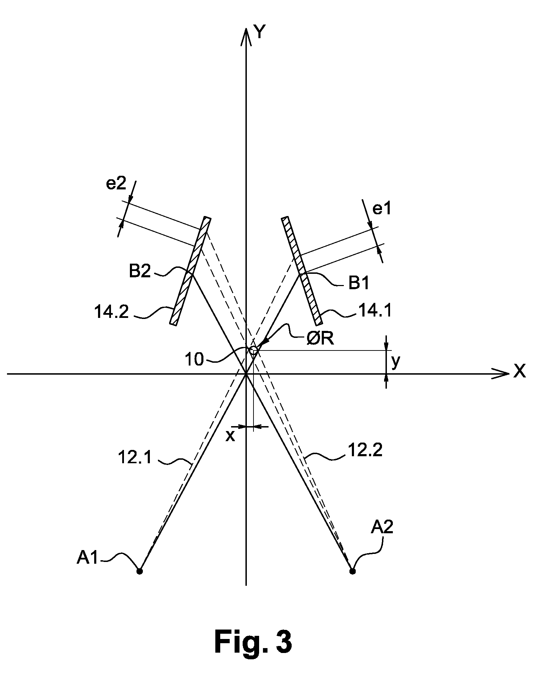

Avantageusement, le dispositif est symétrique selon l'axe Y, comme illustré sur les figures 2 et 3. Ainsi, l'agencement comprend deux sources A1, A2 générant deux faisceaux lumineux divergents 12.1, 12.2 ainsi que deux récepteurs 14.1, 14.2. Dans ce cas, l'image du fil 10 sur le récepteur 14.1, respectivement 14.2, a pour mesure e1, respectivement e2.

Cet agencement permet d'autoriser les mouvements du centre O du fil selon l'axe X sans perturber la ou les mesures. Il permet également de vérifier la circularité de la section du fil.

Selon les cas, on peut mesurer les valeurs e1 et e2 de manière alternée, pour augmenter la fréquence de mesure.

Ainsi, selon l'invention, le fil 10 peut se déplacer dans une fenêtre sensiblement carrée de l'ordre de 5 mm de côté sans perturber la mesure. La valeur mesurée du diamètre du fil est sensiblement constante pour une valeur du diamètre du fil constante, ou du moins sa fluctuation reste dans l'intervalle de tolérance IT correspondant à la précision de la mesure souhaitée.

Selon une caractéristique de l'invention, les valeurs L, I (L et I étant proportionnelles à a et b) et α (alpha) sont choisies de manière à ce que la valeur (e1xe2)/(e1+e2) soit sensiblement constante, et de préférence la mesure Ø_{R} = (e1xe2)/(e1+e2).

A titre d'exemple, en se référant à la figure 3, pour un fil de diamètre égal à 1 mm, on obtient pour e1 en fonction du positionnement du centre O du fil selon les axes X, Y les valeurs suivantes :

| y\X | -3 | -2 | -1 | 0 | 1 | 2 | 3 |
|---|---|---|---|---|---|---|---|
| 3 | 1,6726 | 1,7715 | 1,8821 | 2,0066 | 2,147 | 2,3065 | 2,4888 |
| 2 | 1,6722 | 1,7713 | 1,8823 | 2,0074 | 2,1487 | 2,3095 | 2,4936 |
| 1 | 1,6716 | 1,7709 | 1,8822 | 2,0079 | 2,15 | 2,312 | 2,4978 |
| 0 | 1,6709 | 1,7703 | 1,8819 | 2,008 | 2,1508 | 2,314 | 2,5015 |
| -1 | 1,6702 | 1,7696 | 1,8814 | 2,0079 | 2,1513 | 2,3155 | 2,5045 |
| -2 | 1,6694 | 1,7688 | 1,8807 | 2,0075 | 2,1514 | 2,3165 | 2,5069 |
| -3 | 1,6687 | 1,768 | 1,8799 | 2,0068 | 2,1512 | 2,317 | 2,5087 |

Pour e2, on obtient en fonction du positionnement du centre O du fil selon les axes X, Y les valeurs suivantes :

| y\X | -3 | -2 | -1 | 0 | 1 | 2 | 3 |
|---|---|---|---|---|---|---|---|
| 3 | 2,4888 | 2,3065 | 2,147 | 2,0064 | 1,8821 | 1,7715 | 1,6726 |
| 2 | 2,4936 | 2,3095 | 2,1487 | 2,0072 | 1,8823 | 1,7713 | 1,6722 |
| 1 | 2,4978 | 2,312 | 2,15 | 2,0076 | 1,8822 | 1,7709 | 1,6716 |
| 0 | 2,5015 | 2,314 | 2,1508 | 2,0078 | 1,8819 | 1,7703 | 1,6709 |
| -1 | 2,5045 | 2,3155 | 2,1513 | 2,0076 | 1,8814 | 1,7688 | 1,6702 |
| -2 | 2,5069 | 2,3165 | 2,1514 | 2,0072 | 1,8807 | 1,7688 | 1,6694 |
| -3 | 2,5087 | 2,317 | 2,1512 | 2,0065 | 1,8799 | 1,768 | 1,6687 |

En appliquant la formule (e1xe2)/(e1+e2), on obtient les valeurs suivantes pour le diamètre mesuré du fil:

| y\X | -3 | -2 | -1 | 0 | 1 | 2 | 3 |
|---|---|---|---|---|---|---|---|
| 3 | 1,00 | 1,00 | 1,00 | 1,00 | 1,00 | 1,00 | 1,00 |
| 2 | 1,00 | 1,00 | 1,00 | 1,00 | 1,00 | 1,00 | 1,00 |
| 1 | 1,00 | 1,00 | 1,00 | 1,00 | 1,00 | 1,00 | 1,00 |
| 0 | 1,00 | 1,00 | 1,00 | 1,00 | 1,00 | 1,00 | 1,00 |
| -1 | 1,00 | 1,00 | 1,00 | 1,00 | 1,00 | 1,00 | 1,00 |
| -2 | 1,00 | 1,00 | 1,00 | 1,00 | 1,00 | 1,00 | 1,00 |
| -3 | 1,00 | 1,00 | 1,00 | 1,00 | 1,00 | 1,00 | 1,00 |

Selon une caractéristique de l'invention, le ou les récepteurs 14.1 et/ou 14.2 comprennent une série de capteurs sensibles à la lumière, notamment une série de photodiodes appelées par la suite pixels, le récepteur étant par exemple de type CCD tel que décrit dans le document CH-643.060 ou CMOS.

La valeur du diamètre du fil est calculée en déterminant le nombre de pixels recouverts par l'ombre du fil, connaissant la taille des pixels et la position moyenne du fil entre la source lumineuse et le récepteur.

Selon un premier mode de réalisation, pour les pixels de bord disposés au niveau de chaque bord de l'ombre qui sont partiellement recouverts par l'ombre du fil, on utilise un calcul de proportionnalité, la dimension de la partie recouverte par l'ombre du pixel partiellement recouvert étant proportionnelle à l'intensité de lumière reçue par ledit pixel.

Compte tenu de l'inclinaison du récepteur par rapport au faisceau lumineux, il est nécessaire de tenir compte de la différence de distance entre la source lumineuse et chaque pixel pour calculer la dimension de la partie recouverte par l'ombre des pixels de bord à partir de l'intensité lumineuse reçue par lesdits pixels. Ainsi, on multiplie la valeur calculée par un coefficient fonction de la distance entre la source et le pixel partiellement recouvert.

Lorsqu'un calcul de proportionnalité est utilisé pour déterminer la dimension du fil à partir notamment de l'intensité reçue par les pixels partiellement recouverts, la valeur du diamètre du fil calculée doit tenir compte de l'encrassement du récepteur. A cet effet, une solution consiste à déterminer un coefficient égal au rapport entre l'intensité reçue par un pixel non encrassé et l'intensité reçue par un pixel encrassé à l'instant de la mesure et à multiplier la valeur calculée pour chaque pixel de bord par ledit rapport. En variante, le coefficient peut être égal au rapport entre le temps de charge du pixel non encrassé et le temps de charge du pixel encrassé à l'instant de la mesure.

Selon une variante privilégiée, pour simplifier les calculs et ne plus tenir compte de l'encrassement et donc augmenter la fréquence de mesures, une solution consiste à utiliser un récepteur avec des pixels de petites tailles afin de ne pas tenir compte des pixels partiellement recouverts, la dimension de la partie recouverte par l'ombre des pixels de bord induisant une variation de mesure inférieure à l'intervalle de tolérance souhaité pour la mesure si bien qu'il n'est pas nécessaire d'en tenir compte.

Dans ce cas, la dimension des pixels ou photodiodes doit être inférieure à K x IT, IT étant l'intervalle de tolérance et K étant égal au rapport (a+b)/a.

A titre d'exemple, pour un intervalle de tolérance IT de l'ordre de +ou- 0,5% du diamètre du fil et un rapport K de 3/2, on choisit pour un diamètre de fil 0,2 mm des pixels inférieurs à 3 µm.

Bien entendu, l'invention n'est évidemment pas limitée au mode de réalisation représenté et décrit ci-dessus, mais en couvre au contraire toutes les variantes, notamment en ce qui concerne la nature et les formes du récepteur, du faisceau lumineux ainsi que la technique de mesure de l'image projetée du fil sur le récepteur.

Enfin, on pourrait envisager d'utiliser le dispositif de l'invention pour mesurer d'autres éléments différents d'un fil.

## Revendications

1. Procédé de mesure d'au moins un diamètre de la section d'un fil (10) dans un plan de mesure sensiblement perpendiculaire à la direction de défilement dudit fil (10), consistant à émettre au moins un faisceau lumineux divergent (12) de source virtuelle A de manière à obtenir à la surface d'au moins un récepteur (14) au moins une image du fil et à mesurer ladite au moins une image, **caractérisé en ce qu'**il consiste à disposer au moins une source virtuelle et le récepteur associé de telle manière que, lorsque la section du fil se déplace dans une fenêtre de mesure, la valeur mesurée de l'image du fil est sensiblement constante ou du moins sa fluctuation reste dans un intervalle IT correspondant à la précision de la mesure souhaitée.

2. Dispositif de mesure d'au moins un diamètre de la section d'un fil (10) dans un plan de mesure sensiblement perpendiculaire à la direction du défilement du fil (10), ledit dispositif comprenant au moins un faisceau lumineux divergent (12) de source virtuelle A susceptible de projeter au moins une image du fil sur au moins un récepteur (14) et des moyens de détermination de la mesure de l'image du fil projetée sur le récepteur, **caractérisé en ce qu'**au moins une source virtuelle et le récepteur associé sont disposés de telle manière que, lorsque la section du fil se déplace dans une fenêtre de mesure, la valeur mesurée de l'image du fil est sensiblement constante ou du moins sa fluctuation reste dans un intervalle IT correspondant à la précision de la mesure souhaitée.

3. Dispositif de mesure selon la revendication 2, **caractérisé en ce que** le récepteur (14) a un plan de réception non perpendiculaire avec la droite AB, formant un angle α (alpha) avec ladite droite AB, B étant le point d'intersection entre la droite AO et le plan récepteur, O étant la position moyenne du centre du fil (10), l'angle a (alpha) étant choisi de telle manière qu'il compense les déplacements selon un axe de débattement Y.

4. Dispositif de mesure selon la revendication 3, **caractérisé en ce que** le rapport a/b est de l'ordre de 2, a étant la distance séparant A et O et b étant la distance séparant O et B.

5. Dispositif de mesure selon la revendication 3 ou 4, **caractérisé en ce que** le récepteur (14) forme avec la droite AB un angle α (alpha) susceptible de varier de l'ordre 25 à 85°.

6. Dispositif de mesure selon la revendication 5, **caractérisé en ce que** l'angle a (alpha) a une valeur de l'ordre de 40 à 60°.

7. Dispositif de mesure selon l'une quelconque des revendications 2 à 6, **caractérisé en ce qu'**il comprend deux sources (A1, A2) disposées de telle manière que la mesure obtenue avec l'une des sources compense la mesure obtenue avec l'autre source lorsque le fil se translate selon un second axe de débattement X.

8. Dispositif de mesure selon les revendications 3 et 7, **caractérisé en ce qu'**il est symétrique selon l'axe Y.

9. Dispositif de mesure selon les revendications 4 et 8, **caractérisé en ce que** les valeurs a, b et a (alpha) sont choisies de manière à ce que la valeur (e1xe2)/(e1+e2) soit sensiblement constante.

10. Dispositif de mesure selon l'une quelconque des revendications précédentes, **caractérisé en ce que** le ou les récepteurs (14.1, 14.2) sont de type CCD comportant une série de photodiodes ou pixels, la valeur du diamètre du fil étant calculée en déterminant le nombre de pixels recouverts par l'ombre du fil, connaissant la taille des pixels et la position moyenne du fil entre la source lumineuse et le récepteur.

11. Dispositif de mesure selon la revendication 10, **caractérisé en ce que** le récepteur a des pixels de petites tailles permettant de ne pas tenir compte des pixels partiellement recouverts, la dimension de la partie recouverte par l'ombre des pixels de bord induisant une variation de mesure inférieure à l'intervalle de tolérance souhaité pour la mesure.

12. Dispositif de mesure selon la revendication 11, **caractérisé en ce que** la dimension des pixels doit être inférieure à K x IT, IT étant l'intervalle de tolérance et K étant égal au rapport (a+b)/a.
